(19) Europäisches Patentamt
European Patent Office
Office européen des brevets

(11) **EP 3 878 806 B1**

(12) **EUROPÄISCHE PATENTSCHRIFT**

(45) Veröffentlichungstag und Bekanntmachung des Hinweises auf die Patenterteilung:
**19.04.2023** Patentblatt **2023/16**

(21) Anmeldenummer: **20000101.4**

(22) Anmeldetag: **10.03.2020**

(51) Internationale Patentklassifikation (IPC):
**C01B 3/04** *(2006.01)* **C01B 21/26** *(2006.01)*

(52) Gemeinsame Patentklassifikation (CPC):
**C01B 3/047; C01B 21/02;** Y02E 60/36

(54) **VERFAHREN ZUR HERSTELLUNG VON WASSERSTOFF ODER WASSERSTOFFHALTIGEN BRENNSTOFFEN DURCH KATALYTISCHE AMMONIAKSPALTUNG**

METHOD FOR THE PREPARATION OF HYDROGEN OR HYDROGEN-CONTAINING FUELS BY CATALYTIC CRACKING OF AMMONIA

PROCÉDÉ DE FABRICATION D'HYDROGÈNE OU DE COMBUSTIBLES DE TYPE HYDROGÈNE PAR CLIVAGE D'AMMONIAC CATALYTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.09.2021** Patentblatt **2021/37**

(73) Patentinhaber: **Ammonigy GmbH**
**70563 Stuttgart (DE)**

(72) Erfinder: **Wannemacher, Gerhard**
**64390 Erzhausen (DE)**

(74) Vertreter: **Steffan & Kiehne Patentanwälte PartG mbB**
**Burgplatz 21-22**
**40213 Düsseldorf (DE)**

(56) Entgegenhaltungen:
EP-A1- 3 059 206    US-A1- 2012 040 261
US-A1- 2019 210 009    US-B1- 9 162 203

**Beschreibung**

**Gebiet der Erfindung**

Die vorliegende Erfindung betrifft ein Verfahren zur Umwandlung von Ammoniak durch partielle Oxidation und Spaltung in ein brennbares, wasserstoffhaltiges Gasgemisch mit den Hauptkomponenten Wasserstoff, Wasserdampf und Stickstoff. Damit wird der in der Praxis kaum als Brennstoff nutzbare Ammoniak in ein leicht brennbares Gas überführt.

**Hintergrund der Erfindung**

Ammoniak eignet sich wegen seiner Energiedichte bzw. seines Heizwertes prinzipiell als Brennstoff und bietet die Vorteile, dass es $CO_2$-neutral bleibt, sofern der zur Synthese benötigte Wasserstoff durch Elektrolyse auf der Basis von Solarenergie, Windenergie oder Wasserkraft hergestellt wird. Damit kommt der Brennstoff Ammoniak völlig ohne einen Kohlenstoffträger aus. Die Ausgangsstoffe Stickstoff und Ökostrom sind weltweit ohne Limitierung verfügbar. Weiterhin läßt sich Ammoniak in flüssiger Form in Drucktanks (8 bar) oder bei -33 °C drucklos speichern und kann damit kostengünstig über große Entfernungen transportiert werden.

Wesentlicher Nachteil des Ammoniaks für die Verwendung als Energieträger ist die schlechte Brennbarkeit, die eine direkte Verwendung als Brennstoff in einer Wärmekraftmaschine erschwert. Zur Vermeidung des Nachteils kann Ammoniak vor der Verbrennung wieder in Wasserstoff bzw. ein wasserstoffhaltiges Gasgemisch umgesetzt werden. Die Ammoniakspaltung erfolgt dabei katalytisch über einen separaten Spaltreaktor. Zur Verwendung des so erhaltenen Brennstoffs ist es z. B. zum Betrieb einer Wärmekraftmaschine oder eines Brenners nicht erforderlich, reinen Wasserstoff durch die Spaltung herzustellen, es genügt, wenn ein brennbares Gasgemisch mit ausreichend hohem Wasserstoffanteil erzeugt wird. Zusätzliche Komponenten wie Stickstoff, Wasserdampf oder Reste von nicht umgesetztem Ammoniak stören dabei nicht. Bei der weiteren Verwendung kann dem wasserstoffhaltigen Gasgemisch weiterer Ammoniak zur Energiesteigerung beigesetzt werden.

**Zusammenfassung der Erfindung**

Die Spaltungsreaktion von Ammoniak zu Wasserstoff und Stickstoff ist endotherm. Sie erfolgt üblicherweise mit Unterstützung durch einen Spaltkatalysator bei Temperaturen über 400 °C, meist über 600 ° C. Wegen der Endothermie wird zur Aufrechterhaltung der Reaktion eine Energiezufuhr von außen benötigt. Diese Energie kann beispielsweise durch Verbrennung eines Teils des durch die Ammoniakspaltung hergestellten Wasserstoffs erzeugt werden. Wegen der im Vergleich zur Ammoniakspaltung bei der Wasserstoffverbrennung frei werdenden hohen Energiemengen wird nur ein kleiner Teil des durch die Spaltung erzeugten Wasserstoffs benötigt. Der dazu nicht benötigte Wasserstoff wird dem Verfahren entnommen und weiteren Verwendungen zugeführt. Der ebenfalls gebildete Stickstoff durchläuft als Inertgas den Prozess.

Diverse Verfahren zur Spaltung von Ammoniak und Gewinnung von Wasserstoff nach dem o. g. Prinzip wurden bereits beschrieben (siehe z. B. US2003/0232224, US 2005/0037244 oder US 2013/0266506 sowie EP 3028990). Diese Verfahren haben jedoch den Nachteil, dass die für die Ammoniakspaltung benötigte Energie über Wärmetauscherflächen dem Spaltkatalysator zugeführt werden muss. Aufgrund der bereits hohen Temperaturen am Katalysator werden in Bezug auf die Wärmequelle noch höhere Temperaturen erforderlich, was hohe Anforderungen an den Wärmetauscher stellt und schließlich zu einer Vergrößerung des Spaltreaktors und höherem Materialaufwand führt. In dem Verfahren der US 2013/0266506 findet ein Wärmeaustausch mit dem Verbrennungsabgas der Ammoniakverbrennungsmaschine statt.

In EP 3059206 wird die für die Spaltung des Ammoniaks erforderliche Energie durch eine Beimischung von Luft oder Sauerstoff unter teilweiser Oxidation des Ammoniaks bereitgestellt. Die für die Spaltung erforderliche Energie wird dabei innerhalb des Gasgemisches selbst frei und Wärmetauscherflächen für die Energiezufuhr an die Katalysatorschicht können entfallen. Nachteil ist der geringere Wasserstoffgehalt im hergestellten Brenngas, der aber toleriert werden kann, wenn die Gasmischung noch in Luft brennbar bleibt. In EP 3059206 wird ein Kreislaufreaktor erforderlich. Nachteilig wirkt sich hier der Aufwand für die Kreislaufpumpe aus, insbesondere weil die Pumpe bei der hohen Temperatur des Spaltkatalysators zu betreiben ist. Weiterhin bedarf es des Einsatzes von beweglichen Bauteilen mit der damit verbundenen Verschlechterung der Betriebssicherheit.

US 2012/040261 offenbart ein Verfahren zur Herstellung von Wasserstoff aus Ammoniak. Eine Mischung aus Ammoniak und Luft wird einen Reaktor zugeführt. Der Reaktor enthält im Strömungsrichtung einen Ammoniak-Oxidationskatalysator gefolgt von einem Ammoniak-Spaltkatalysator. Am Oxidationskatalysator wird einen Teil des Ammoniaks oxidiert. Das verbleibende Ammoniak wird am Spaltkatalysator zersetzt.

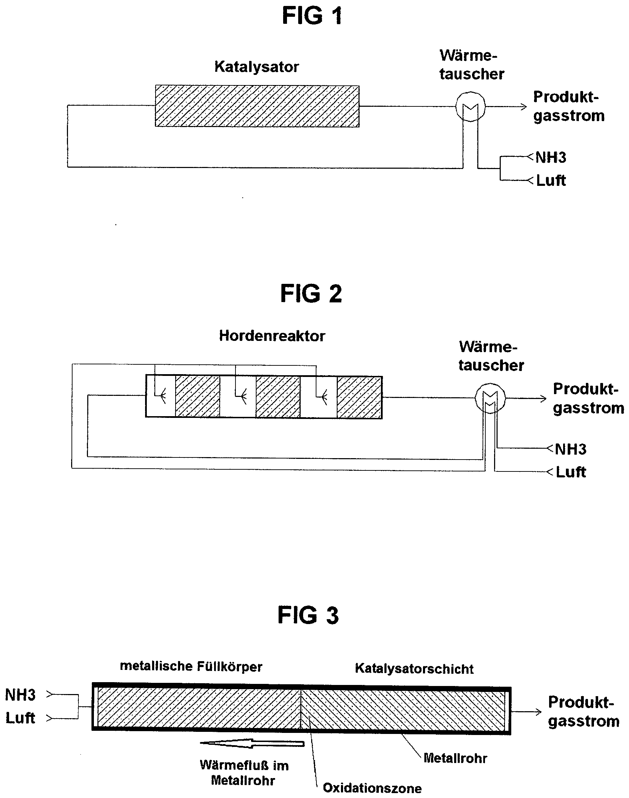

Im vorliegenden Fall wird ein weiteres Verfahren zur Ammoniakspaltung beschrieben (s. FIG 1). Als Ausgangsstoffe werden Ammoniak und Luft in einen katalytischen Reaktor eingespeist. Die Luftmenge wird soweit begrenzt, wie es für die Energiebereitstellung zur Ammoniakspaltung durch Oxidation erforderlich ist. Damit wird ein Teil des Ammoniaks zu Stickstoff und Wasser oxidiert, während der größere Teil in Wasserstoff und Stickstoff gespalten wird. Die Ammoniakumwandlung erfolgt dabei an einem Katalysator, der aus einem Gemisch von zwei verschiedenen Katalysatoren besteht. Der eine Teil besteht aus einem üblichen Oxidationskatalysator (vorzugsweise Platin oder Palladium auf Aluminiumoxid oder anderen Trägermaterialien), der andere Teil des Gemischs aus einem üblichen Ammoniak-Spalt-Katalysator (z.B. Nickel oder Eisen auf geeigneten Trägermaterialien wie z. B. Magnesiumoxid oder Aluminiumoxid). Ggf. können die aktiven Komponenten auch zusammen auf einem geeigneten Trägermaterial aufgebracht werden.

Zum Erhalt eines möglichst hohen Wasserstoffanteils im Produktgemisch, nachfolgend auch Spaltgas genannt, wird der Luftstrom soweit wie möglich begrenzt. Eine Mindestzufuhr an Luft ist jedoch erforderlich, um die Spaltreaktion aufrecht zu erhalten. Die erforderliche Luftzufuhr ergibt sich damit daraus, dass für die Gesamtreaktion noch eine gewisse Exothermie erhalten werden muß, um die Wärmeverluste im Spaltreaktor zu kompensieren. Auf eine externe Zufuhr weiterer Energie, z. B. durch eine elektrische Zusatzheizung, wird dabei verzichtet.

Unter der vereinfachenden Annahme, dass Luft zu 20% aus Sauerstoff und zu 80% aus Stickstoff besteht, ergibt sich die summarische Umsetzung im Spaltreaktor etwa nach der folgenden Gleichung:

$$8\ NH_3 + O_2 + 4\ N_2 = 2\ H_2O + 8\ N_2 + 10\ H_2$$

$$\Delta H_r = 2\ (-242\ kJ) - 8\ (-46\ kJ) = -116\ kJ$$

Unter diesen Bedingungen bleibt die Reaktion bei Standardbedingungen betrachtet schwach exotherm und es kann ein Gasgemisch mit einem Anteil von ca. 50% an Wasserstoff erhalten werden. Bei der Reaktionstemperatur von z. B. 600 °C sinkt die Reaktionsenthalpie wegen der Unterschiede in den spezifischen Wärmen der Ausgangs- und Endprodukte weiterhin ab, bleibt aber exotherm.

Zur Verringerung von Wärmeverlusten wird der Eingangsstrom in den Reaktor mit dem Produktgas aus dem Reaktor über einen Wärmetauscher vorgeheizt. Für das in FIG 1 angenommene Beispiel wird eine Temperatur des Produktgases von 700 °C am Katalysatorausgang und eine Temperatur des vorgeheizten Eingangsstroms von 500 °C angenommen. Die Temperatur des Produktgases nimmt bis zum Ausgang aus dem Wärmetauscher auf ca. 200 °C ab. Das Temperaturniveau dieses Wärmetauschers liegt deutlich unterhalb des Temperaturniveaus bei indirekt beheizter Katalysatorschüttung wie in EP 3028990 beschrieben, wo auf der wärmeren Seite des Wärmetauschers Temperaturen über 1000 °C erreicht werden, was zu entsprechend höherem Materialeinsatz führt. Ein weiterer Vorteil des beschriebenen Verfahrens gegenüber dem von EP 3028990 liegt im deutlich einfacheren Aufbau der Reaktorkonstruktion incl. Wärmetauscher.

Bei großzügiger Auslegung des Wärmetauschers gemäß der vorliegenden Anmeldung kann die Temperaturdifferenz noch verkleinert werden. Zur Überbrückung der durch diese Temperaturdifferenz bedingten Verluste sowie zur Kompensation der Isolationsverluste des Reaktors ist der Anteil der Luft etwas höher als in der o. g. Gleichung einzustellen. Dadurch wird etwas mehr Ammoniak oxidiert und der Wasserstoffgehalt geringfügig vermindert. Zur Erläuterung der prinzipiellen Zusammenhänge kann jedoch die o. g. Gleichung zugrunde gelegt werden.

Die Temperaturführung des Reaktors erfolgt durch Nachregelung des Mischungsverhältnisses zwischen Ammoniak und Luft. Die Prozessführung erfolgt dabei derart, dass eine Mindesttemperatur im Spaltreaktor nicht unterschritten wird. Diese Temperatur ist von der Art des Spaltkatalysators abhängig und liegt so hoch, dass der Katalysator zuverlässig und mit hoher Reaktionsgeschwindigkeit arbeitet. Übliche Temperaturen für Nickel - oder Eisenkatalysatoren liegen z.B. bei ca. 700°C, bei Verwendung von Ruthenium können auch erheblich niedrigere Temperaturen ausreichend sein.

Die o. g. Gesamtreaktion wird in zwei Teilreaktionen getrennt, nämlich in die Oxidation eines Teils des Ammoniaks, solange Sauerstoff verfügbar ist und in die Spaltung der verbliebenen Ammoniakmenge. Die beiden Stufen lassen sich über die folgenden Reaktionsgleichungen beschreiben. Dabei verläuft die erste Reaktion exotherm und die Folgereaktion endotherm.

$$8\ NH_3 + O_2 + 4\ N_2 \Rightarrow 2\ H_2O + 14/3\ N_2 + 20/3\ NH_3$$

$$2\ H_2O + 14/3\ N_2 + 20/3\ NH_3 \Rightarrow 2\ H_2O + 8\ N_2 + 10\ H_2$$

Die Oxidation verläuft mit einer wesentlich höheren Reaktionsgeschwindigkeit als die Ammoniakspaltung, so dass man zur Auslegung des Reaktors von dem Extremfall ausgehen muß, dass die erste Reaktion bereits abgeschlossen ist, bevor die zweite Reaktion beginnt. Die Oxidationsreaktion bewirkt eine adiabatische Temperaturerhöhung des Gasgemisches von ca. 600 °C. Bei stationärem Betrieb und einer Eingangstemperatur am Reaktor von beispielsweise 600 °C ist damit bei Vernachlässigung der Wärmeverluste mit einem Temperaturanstieg auf 1200°C zu rechnen. In der nachfolgenden Reaktionszone würde dann die Temperatur durch die Ammoniakspaltung von 1200 auf 600 °C fallen.

Zur Vermeidung von Schäden am Spaltkatalysator kann der Katalysator auf die hohen Temperaturen ausgelegt werden. Bei Verwendung von Aluminiumoxid- oder Magnesiumoxidträgern ist eine hohe thermische Stabilität gegeben. Eine weitere Möglichkeit besteht darin, die Katalysatorschüttung in mehrere Sektoren zu unterteilen und die Luft nicht von Anfang an dem Ammoniak beizumischen sondern erst vor den jeweiligen Sektoren zuzugeben. Ein entsprechender Aufbau ist in FIG 2 dargestellt. Die adiabatischen Temperaturerhöhungen werden damit abgemildert und die Temperaturgradienten in der Katalysatorschüttung vermindert.

Wegen der hohen Reaktionsgeschwindigkeit der Oxidationsreaktion genügt im Allgemeinen die Beimischung einer geringen Menge von unter 10% an Oxidationskatalysator zu der gesamten Katalysatormenge, was die Kosten verringert. Weitere Kostensenkungen sind möglich, wenn der Oxidationskatalysator im Anfangsteil der Schüttung konzentriert wird.

Der gesamte Spaltprozess läuft zwar energieautark, zum Hochfahren des Reaktors muss aber von außen zweckmäßigerweise über eine elektrische Zusatzheizung vorgewärmt werden. Die Vorheizung ist mindestens bis zu einer Temperatur, bei der die Oxidationsreaktion beginnt, vorzunehmen. Diese liegt bei ca. 200 - 300 °C. Bei sparsamer Auslegung des Wärmetauschers muss dieser aber mindestens so groß dimensioniert werden, dass die Ausgangsstoffe bis auf die Zündtemperatur für die Oxidationsreaktion vorgeheizt werden. Zum Erreichen einer hohen Wasserstoffkonzentration und eines hohen Wirkungsgrades ist der Wärmetauscher möglich groß zu dimensionieren.

Über das beschriebene Verfahren kann ein Spaltgas mit einem Wasserstoffgehalt von 40 - 50 % erhalten werden, welches direkt als Brennstoff in einer Wärmekraftmaschine genutzt werden kann. Der Heizwert ist dazu ausreichend, die weiteren Bestandteile Wasserdampf und Stickstoff stören nicht. Ggf. kann Wasserdampf zur Erhöhung des Heizwertes abgetrennt werden. Nicht umgesetzte Reste an Ammoniak werden von der Wärmekraftmaschine ebenfalls toleriert. Andererseits besteht sogar die Möglichkeit, dem erzeugten Brennstoff weiteres Ammoniak beizumischen, um die gesamte, der Wärmekraftmaschine zugeführte Feuerungswärmeleistung zu vergrößern.

Bei Bedarf kann der Wasserstoffgehalt des Spaltgases zusätzlich erhöht werden, indem anstelle von Luft als Oxidationsmittel reiner Sauerstoff verwendet wird. Der Wasserstoffgehalt kann dadurch auf ca. 60% und bei zusätzlicher Abscheidung des gebildeten Wasserdampfes auf ca. 70 % erhöht werden. Unter diesen Voraussetzungen kann der maximal mögliche Wert von 75%, der bei Spaltung von reinem Ammoniak unter externer Energiezufuhr erhalten wird, annähernd erreicht werden. Zur Steigerung des Wasserstoffanteils im Spaltgas ist auch die Verwendung von angereichertem Sauerstoff möglich, der kostengünstig aus Luftzerlegungsanlagen erhalten werden kann.

Die Produktionsrate an Wasserstoff kann bei einer gegebenen Reaktorgröße auch durch Erhöhung des Gesamtdrucks im Reaktor gesteigert werden. Maßgebliche Größe für die Wasserstoffproduktion ist die Verweilzeit des Ammoniaks in der Katalysatorschicht. Die Verweilzeit wird mit zunehmendem Druck verlängert, so dass im Vergleich zum Reaktorbetrieb bei Atmosphärendruck ein höherer Umsatz mit ansteigendem Druck erzielt wird.

Sofern das Spaltgas in einer Wärmekraftmaschine verwendet werden soll, ist es zweckmäßig, das Gas soweit möglich über den beschriebenen Wärmetauscher abzukühlen. Das Spaltgas kann aber auch in industriellen Brennprozessen eingesetzt werden, wo es in offener Flamme mit Luft verbrannt wird. Beispiele sind das Brennen von Ziegelsteinen oder die Zementherstellung. In diesen Fällen kann das Spaltgas direkt vom Katalysatorausgang z. B. bei der Temperatur von 600 - 700 °C dem Brenner zugeführt werden. Dabei entfällt der Aufwand für den Wärmetauscher. In diesem Fall muß allerdings die Ammoniak-Luft-Mischung am Eintritt in die Katalysatorschüttung mindestens so weit vorgeheizt sein, dass eine Zündung erfolgt bzw. die Oxidationsreaktion startet. Um hier ganz ohne separaten Wärmetauscher auszukommen, kann die zur Vorheizung erforderliche Wärme durch längs zur Strömungsrichtung des Gases eingebaute Bleche oder Stäbe durch Wärmeleitung übertragen werden. Die Stäbe ragen dabei beginnend im vorderen Teil der Katalysatorschüttung mit der Oxidationszone gegen die Strömung in das ankommende Frischgas hinein. Durch Wärmeübertragung von den Stäben auf das Frischgas werden die Ausgangsstoffe vorgeheizt.

Bei nicht zu großen Reaktordurchmessern wird diese Funktion bereits durch die Reaktorwand erfüllt, über die Wärme in Richtung der Frischgaszufuhr transportiert wird. Ein entsprechender Aufbau ist in FIG 3 dargestellt. Im Einzelnen wurde hier ein Edelstahlrohr mit 25 mm Innendurchmesser und 2,5 mm Wandstärke verwendet.

Der Raum vor der Katalysatorschüttung wurde mit metallischen Füllkörpern zur Verbesserung des Wärmeübergangs vom Metallrohr auf das Frischgas aufgefüllt. Die Länge der Vorwärmstrecke betrug 10 cm. Mit der dargestellten Anordnung wurde ein Volumenstrom an Ammoniak derart gespalten, dass bei Verbrennung des Spaltgases eine Wärmeleistung von 3 kW freigesetzt wurde. Dabei wurde eine Katalysatorschüttung von 150 ml Inhalt verwendet.

Für größere Leistungen können z. B. eine Vielzahl derartiger Rohre parallel geschaltet werden. Weiterhin kann die Wärmeleitung gegen den Gasstrom auch über geeignete Stäbe oder Bleche, die im Katalysatorbett eingebaut sind, wahrgenommen werden. Im Fall der wegen der guten Wärmeleifähigkeit naheliegenden Verwendung von Kupferstäben sind diese zur Vermeidung von Korrosion durch Ammoniak mit einer entsprechenden Schutzschicht zu überziehen oder mit Edelstahlrohren einzuhausen.

In dem erfindungsgemäßen Verfahren wird ein Umsatz von Ammoniak im Bereich von 65-100 % erhalten.

4

Bevorzugt wird ein Umsatz von Ammoniak im Bereich von 70-100% erhalten, noch bevorzugter 75-100 % und ganz besonders bevorzugt 80-100%.

**Kurze Beschreibung der Zeichnungen**

Fig. 1 zeigt ein verfahrenstechnisches Fließbild für den vorgesehenen Prozess zur Ammoniakspaltung in einem Reaktor mit Oxidations- und Spaltkatalysator incl. des Wärmetauschers

Fig. 2 zeigt das Fließbild entsprechend Fig. 1, bei dem jedoch die Katalysatorschüttung in einzelne Horden aufgeteilt ist und die Luft aufgeteilt vor jeder Horde dem Gasstrom beigemischt wird.

Fig. 3 stellt ein Ausführungsbeispiel in Form eines Rohrreaktors dar, bei dem auf einen separaten Wärmetauscher verzichtet wird und die Vorheizung der Ausgangsstoffe durch Wärmeleitbleche hier in Form der Reaktorwandung erfolgt.

**Patentansprüche**

1. Verfahren zur Umwandlung von Ammoniak in ein brennbares, wasserstoffhaltiges Gasgemisch, **dadurch gekennzeichnet, dass**

- ein Ammoniak-Luft-Gemisch mit hohem Brennstoffüberschuß in einem Reaktor, der ein Gemisch von einem üblichen edelmetallhaltigen Oxidationskatalysator wie Platin oder Palladium auf Aluminiumoxid oder anderen temperaturstabilen Trägermaterialien und einem üblichen Ammoniak-Spalt-Katalysator wie z.B. Eisen, Nickel oder Ruthenium auf entsprechenden Trägermaterialien wie Aluminiumoxid oder Magnesiumoxid enthält, derart umgesetzt wird,
- dass in einer ersten Reaktionsphase hauptsächlich eine Oxidation von Ammoniak oder intermediär gebildetem Wasserstoff und
- nachfolgend eine Spaltung von Ammoniak in Wasserstoff und Stickstoff erfolgt,
- der Produktstrom, bestehend aus den Hauptkomponenten Wasserstoff, Wasserdampf und Stickstoff sowie aus evtl. nicht umgesetztem Ammoniak am Reaktorausgang entnommen wird,
- das Mischungsverhältnis vom Ammoniak und Luft so gewählt wird, dass unter Berücksichtigung von Wärmeverlusten oder auch Zuführung von externer Wärme ein Umsatz von Ammoniak im Reaktor im Bereich von 65-100 % erhalten wird,

wobei über einen Wärmetauscher die Eingangsgasströme unter Abkühlung des heißen Produktgasstroms vor Eintritt in den Reaktor vorgeheizt werden.

2. Verfahren nach Anspruch 1, bei dem der gesamte Spaltprozess energieautark läuft und nur zum Hochfahren des Reaktors von außen vorgewärmt werden muss.

3. Verfahren nach Anspruch 1 und 2, bei dem Oxidations- und Spaltkatalysator nicht homogen gemischt, sondern in unterschiedlichen Lagen in verschiedenen Mischungsverhältnissen eingebaut werden, um die Temperaturführung im Reaktor zu optimieren.

4. Verfahren nach Anspruch 1, 2 und 3, bei dem der Oxidationskatalysator räumlich getrennt am Reaktoreingang vor dem Spaltkatalysator eingebaut ist.

5. Verfahren nach Anspruch 1 und 2, bei dem die jeweils aktive Komponente von Oxidations- und Spaltkatalysator wie Edelmetall und Eisen oder Nickel auf einem gemeinsamen Träger ohne örtliche Trennung aufgebracht ist.

6. Verfahren nach Anspruch 1 - 4, bei dem die aktive Komponente des Spaltkatalysators nicht auf einem separaten Träger aufgebracht ist, sondern das Metall selbst als Trägermaterial dient.

7. Verfahren nach Anspruch 1 - 6, bei dem die Katalysatorschüttung nicht aus einer einzigen Packung besteht, sondern diese in einzelne Horden aufgeteilt ist und die Luft in einzelnen Anteilen erst vor jeder Horde beigemischt wird.

8. Verfahren nach Anspruch 1 - 7, bei dem als Oxidationsmittel nicht Luft, sondern ein Gas mit höherem Sauerstoffgehalt oder reiner Sauerstoff eingesetzt wird.

9.  Verfahren nach Anspruch 1 - 8, bei dem der Reaktor bei einem erhöhten Druck von bis zu 50 bar betrieben wird.

**Claims**

1.  A process for the conversion of ammonia into a combustible gas mixture containing hydrogen, **characterized in that**

    - a mixture of ammonia and air with a high fuel surplus is reacted in a reactor which contains a mixture of a common noble-metal containing oxidation catalyst such as platinum or palladium on aluminum oxide or other temperature-stable carrier materials, and a common ammonia cracking catalyst such as e.g., iron, nickel or ruthenium, on corresponding carrier materials such as aluminum oxide or magnesium oxide, in such a way that,
    - in a first reaction phase, mainly oxidation of ammonia or intermediately formed hydrogen is effected, and
    - subsequently cracking of ammonia into hydrogen and nitrogen,
    - the product stream, consisting of the main components hydrogen, water vapor and nitrogen, as well as possibly unreacted ammonia, is extracted at the reactor outlet,
    - the mixing ratio of ammonia and air is selected such that under consideration of heat losses, or also introduction of externally supplied heat, an ammonia reaction turnover in the range of 65 -100 % is achieved in the reactor,

    wherein the feeding gas streams before entering the reactor are preheated by means of a heat exchanger, with cooling of the hot product gas stream.

2.  The process according to claim 1, wherein the complete cracking process is effected in an energetically self-sufficient way and has only to be preheated for starting up the reactor.

3.  The process according to claim 1 and 2, wherein the oxidation and cracking catalysts are not homogenously mixed, but incorporated in different layers and differing mixing ratios in order to optimize the temperature control in the reactor.

4.  The process according to claim 1, 2 and 3, wherein the oxidation catalyst is incorporated at the reactor inlet in a spatially separated manner before the cracking catalyst.

5.  The process according to claim 1 and 2, wherein the respectively active component of the oxidation and cracking catalysts, such as noble metals and iron or nickel, is applied on a common carrier without any local separation.

6.  The process according to claim 1 - 4, wherein the active component of the cracking catalyst is not applied to a separate carrier, but the metal itself serves as the carrier material.

7.  The process according to claim 1 - 6, wherein the catalyst bed does not consist of a single package, but is divided into separate trays, and the air only is admixed before each tray in individual portions.

8.  The process according to claim 1 - 7, wherein not air, but a gas with higher oxygen content or pure oxygen is employed as the oxidant.

9.  The process according to claim 1 - 8, wherein the reactor is operated at an increased pressure of up to 50 bar.

**Revendications**

1.  Procédé de transformation de l'ammoniac en un mélange gazeux combustible contenant de l'hydrogène, **caractérisé en ce**

    **qu'**on fait réagir un mélange ammoniac-air à fort excès de combustible dans un réacteur qui contient un mélange d'un catalyseur d'oxydation usuel contenant des métaux précieux, comme le platine ou le palladium, sur de l'oxyde d'aluminium ou d'autres matériaux de support stables à la température, et d'un catalyseur de craquage usuel de l'ammoniac, comme par exemple le fer, le nickel ou le ruthénium, sur des matériaux de support correspondants, comme l'oxyde d'aluminium ou l'oxyde de magnésium, de telle manière

- **que** dans une première phase de réaction s'effectue principalement une oxydation de l'ammoniac ou de l'hydrogène formé de façon intermédiaire, et
- il se produit ensuite un craquage de l'ammoniac en hydrogène et en azote,
- le flux de produit, composé des principaux composants que sont l'hydrogène, la vapeur d'eau et l'azote, ainsi que l'ammoniac éventuellement non converti, est prélevé à la sortie du réacteur,
- le rapport de mélange de l'ammoniac et de l'air est choisi de telle manière qu'on obtient un taux de conversion de l'ammoniac dans le réacteur de l'ordre de 65 à 100 %, en tenant compte des pertes de chaleur ou de l'apport de chaleur externe,

les flux de gaz d'entrée étant préchauffés avant l'entrée dans le réacteur, par l'intermédiaire d'un échangeur de chaleur, avec refroidissement du flux de gaz produit chaud.

2. Procédé selon la revendication 1, dans lequel l'ensemble du procédé de craquage fonctionne de manière autonome en énergie et ne doit être préchauffé de l'extérieur que pour le démarrage du réacteur.

3. Procédé selon les revendications 1 et 2, dans lequel le catalyseur d'oxydation et le catalyseur de craquage ne sont pas mélangés de manière homogène, mais sont installés en différentes couches dans des rapports de mélange diverses, afin d'optimiser la gestion de la température dans le réacteur.

4. Procédé selon les revendications 1, 2 et 3, dans lequel le catalyseur d'oxydation est installé de manière spatialement séparée à l'entrée du réacteur avant le catalyseur de craquage.

5. Procédé selon les revendications 1 et 2, dans lequel le composant actif respectif du catalyseur d'oxydation et du catalyseur de craquage, tels qu'un métal noble et le fer ou le nickel, sont appliqués sur un support commun sans séparation locale.

6. Procédé selon les revendications 1 à 4, dans lequel le composant actif du catalyseur de craquage n'est pas appliqué sur un support séparé, mais le métal lui-même est utilisé comme matériau de support.

7. Procédé selon les revendications 1 à 6, dans lequel le lit de catalyseur n'est pas constitué d'un seul garnissage, mais celui-ci est divisé en claies individuelles et l'air n'est mélangé en proportions individuelles qu'avant chaque claie.

8. Procédé selon les revendications 1 à 7, dans lequel on utilise comme agent oxydant non pas de l'air, mais un gaz à teneur en oxygène plus élevée ou de l'oxygène pur.

9. Procédé selon les revendications 1 à 8, dans lequel le réacteur est exploité à une pression élevée allant jusqu'à 50 bars.

## FIG 1

Katalysator

Wärmetauscher

Produktgasstrom

NH3
Luft

## FIG 2

Hordenreaktor

Wärmetauscher

Produktgasstrom

NH3
Luft

## FIG 3

metallische Füllkörper          Katalysatorschicht

NH3
Luft

Produktgasstrom

Wärmefluß im
Metallrohr

Metallrohr

Oxidationszone

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030232224 A
- US 20050037244 A
- US 20130266506 A
- EP 3028990 A
- EP 3059206 A
- US 2012040261 A